# EUROPEAN PATENT SPECIFICATION

(11) **EP 1 921 827 B1**
(45) Date of publication and mention of the grant of the patent: **21.03.2012**
(21) Application number: 06023163.6
(22) Date of filing: 07.11.2006
(51) Int. Cl.: H04L 29/12, H04L 29/06

(54) **Method for forwarding address prefix data in a network and device**
Methode zur Weiterleitung von Adress-Prefix-Daten in einem Netzwerk und Vorrichtung
Procédé pour la retransmission des données de préfixe d'adresse dans un réseau et dispositf

(43) Date of publication of application: 14.05.2008
(73) Proprietor: Nokia Siemens Networks GmbH & Co. KG, 81541 München (DE)
(72) Inventor: Camilo, Tiago, 2950 Quinta do Anjo (PT); Esteves Carvalho Sofia, Rute, Dr., 81673 München (DE); Pasqualini, Sandrine, 81547 München (DE); Wevering, Stefan, 82284 Grafrath (DE)

(56) References cited:
- US-A1- 2004 013 113
- US-A1- 2004 028 040
- US-A1- 2005 041 671
- CHELIUS E FLEURY INRIA G ET AL: "Using OSPFv3 for IPv6 router autoconfiguration <draft-chelius-router-autoconf-00.txt> 00.txt" IETF STANDARD-WORKING-DRAFT, INTERNET ENGINEERING TASK FORCE, IETF, CH, 13 June 2002 (2002-06-13), XP015000481 ISSN: 0000-0004
- CHELIUS G ET AL: "No Administration Protocol (NAP) for IPv6 Router Auto-Configuration" ADVANCED INFORMATION NETWORKING AND APPLICATIONS, 2005. AINA 2005. 19TH INTERNATIONAL CONFERENCE ON TAIPEI, TAIWAN 25-30 MARCH 2005, PISCATAWAY, NJ, USA,IEEE, 25 March 2005 (2005-03-25), pages 801-806, XP010790115 ISBN: 0-7695-2249-1

## Description

The invention relates to a method for forwarding address prefix data in a network. Address prefix data are for instance used by internet protocols to ease routing by using so-called prefix aggregation.

One kind of an access network that may be used is an Ethernet access network. The access network provides access to a second network, for instance to the Internet or to a service provider network. A plurality of user devices or user networks are connected to an access node device that is part of the access network. It is possible to use copper telephone lines and DSL (Digital Subscriber Line) methods to connect the user devices and the access node. Alternatively other methods are used.

It is an object of the invention to provide a simple method for forwarding address prefix data, especially in an access network. The method, in particular, shall be an auto configuration method or a so-called no administration method. Alternatively only few administration shall be necessary. Furthermore, it is an object of the invention to provide a device.

Such subject matter is known from US2005/041671 A1.

The object related to the method is solved by the method of claim 1. Embodiments are given in the subclaims.

In an embodiment of the invention, the method comprises the step of:
- creating a message in a network device,
the message comprises:
- address prefix data, and
- a first identifier or ID which relates to a service available in the network or which relates to a service provider.

The message is used for instance to automatically distribute the prefix data. The network device, for instance, creates the message if it uses address prefix data from a pool of prefix data for the first time to identify a link to another network device or to a user device or to a user network. The network device is in particular an access node device of an access network and/or a router of an access network.

The network device automatically informs other network devices of a request or of the allocation of the address prefix data that it will use by using the message. The information is, therefore, distributed automatically in the access network. It is possible for the other network devices to take into consideration the information when requesting address prefix data from the pool by itself. It is especially possible to prevent double use of prefix data or so-called collision.

The identifier allows to use the address prefix data in an efficient way. Another network device knows which address prefix data belongs to which service due to the message. Therefore, the other network device can be aware of the service if it has to choose address prefix data by itself.

In an embodiment of the method, the address prefix data includes a part of the prefix that can be administrated by a service provider, especially so-called next level aggregator (NLA) data and/or so-called site level aggregator (SLA) data or value. Theses types of aggregators are explained for instance in IETF (Internet Engineering Task Force), RFC (Request For Comment) 2373, chapter 2.5.7, or in RFC 2374, chapter 3.1. The NLA and the SLA can be changed by the service provider. This is contrary to the situation for the so-called top level aggregator TLA, which cannot be modified, changed or administrated by a service provider.

RFC 2450, for instance, defines a so-called sub-TLA and a NLA with a shorter length for an initial phase. Based on RFC 2450 regional internet registries (RIR) defined the positions of the NLA and SLA for the initial phase. This positions can be changed in future.

The RIR for Europe (RIPE), for instance, defined the position of the NLA in the standard RIPE 196, chapter 3.2. If counting is, for instance, started with zero from left to right, the NLA starts with bit 35 and ends with bit 47. The SLA starts with bit 48 and ends with bit 63. But this is only one possibility. Many service providers use other positions and lengths for the TLA and NLA.

In a next embodiment of the method, the message does not include a part of the prefix which is invariable or unchangeable for the service provider, especially a format prefix and/or a TLA including sub-TLAs. The advantage of not including this part of the prefix is that the message can be shorter. Furthermore, it is possible not to include this part, because there is the service identifier that can be related to TLAs.

In an alternative embodiment, the message includes a part of the prefix which is unchangeable for the service provider, especially a format prefix and/or a TLA and/or a sub-TLA. The advantage of including this part of the prefix additionally to the NLA and/or the SLA, in other words, including the complete prefix, is that for instance only slight modifications of other methods are necessary. For instance, it is possible to carry out a prefix distribution more easily or to use the first part of the prefix for other purposes.

In a next embodiment, the message includes a second identifier identifying a link or an interface of a network device. Again, only slight modifications of other methods may be necessary.

In a next embodiment, the message is a first message, in the following also called a link message. The link message is sent by the network device if the address prefix assigned to a link has changed. Changing also includes the first use of an address prefix for this link. The sending of the link message enables local consensus on a link. The configuration of the access network does not change often. Nevertheless an auto configuration mechanism can be used by using the link message allowing new devices to be integrated automatically. This is possible in an easy way because other parts of the auto configuration mechanism are used for the prefix distribution to the user.

In a further embodiment, the link message is distributed only on a single link between two network devices, i.e. not on other links in the network. In other words, flooding of the link message is not necessary and, therefore, bandwidth of the network can be saved.

In an embodiment, the link message includes length data. The value of the length data is equal to the length of the part of the prefix that can be administrated by a service provider. By giving the length it is possible to use address prefix data of different length as it is necessary for an effective use of the address space.

In an embodiment a further network device receives the link message. The further network device stores the address prefix data together with the corresponding first identifier in a data base or in an interface date field. This data base is preferably used for allocating new prefixes or part of prefixes depending on service identifiers or first IDs. If the further network device needs a new prefix it checks the data base using the service identifiers and selects an address prefix that is not used by other network devices. Then, the network device requests the use of the selected prefix. If there is no collision in the network, the receiving network device can allocate this prefix and use it itself.

In a next embodiment, the network device receiving the link message updates the prefix of its receiving interface using the address prefix data. This supports automatic link configuration.

In a next embodiment, the message is a second message, which is called an SP-LA message (Service Provider Link state Advertisement). The second message is sent by the network device for instance if the address prefix assigned to a link of this network device has changed. Changing includes again the first use of a prefix on this link. Thus, the SP-LA message is created in the same case like the link message. The SP-LA message is distributed preferably in a network area, i.e., this message is flooded. The second message is also sent by the network device if an address prefix is requested. for instance, if an access node device requests a prefix for distribution to user devices or user networks. It is possible to use the SP-LA message only for the second purpose.

In an embodiment, the second message is distributed to more than one network device, especially to more than two or more than three network devices. In a next embodiment, the network devices are routers and access nodes. The access nodes may be or are layer 2 switches, which have IP-awareness but do not fulfil IP routing.

In an embodiment, a further network device receives the SP-LA message. The further network device stores the address prefix data together with the corresponding first identifier in a data base. Preferably only one data base is used per network device. Nevertheless, it is possible to use more than one data base, maybe for instance one data base for each service identifier.

The same data base is preferably used for storing the prefix of a link message and the prefix of a SP-LA message.

In a next embodiment, the data base is again used for allocating or requesting new prefixes or part of prefixes depending on a first ID. Again, it is possible to select prefixes depending on first IDs, for instance service IDs.

In another embodiment, the message is a third message that is called a TLA message in the following. The TLA message includes a part of the prefix, which is unchangeable for a service provider or service, especially a TLA or a sub-TLA. Therefore, it is possible to use the TLA message to distribute TLAs in the network.

In a next embodiment, the TLA message does not contain a part of the prefix that is administrated by a service provider. Therefore, the TLA message differs from a link message or from a SP-LA message.

According to an embodiment, the TLA message is sent if, at least, one TLA is changed or is added to the network. The TLA is provided automatically or manually from an edge router, for instance.

In a next embodiment, the TLA message is distributed to more than one network device, especially to edge routers and access nodes. In other words, the TLA message is also flooded into the network.

In a further embodiment, a further network device receives the TLA message. The further network device stores the TLA and the first identifier or the service ID in a data base, preferably in the same data bases as mentioned above. Thus, it is possible for the further device to consider service identifiers when selecting prefixes including the TLAs.

In a next embodiment, the data base is used for allocating and/or requesting new prefixes or part of prefixes depending on a value for a first identifier. For instance, a complete prefix including a TLA and an SLA is provided to a user device or to a user network.

In a next embodiment, the data base that is updated when a TLA message is received is also used for modifying the address prefixes of links according to changes of TLA data base. This relates to the optional auto configuration process.

In a further embodiment the first ID identifies an internet service provider, an application service provider or one of the following services:
- voice over IP (VoIP),
- video,
- internet access.

In other examples other services or providers are used.

In a second aspect, disclosed is also a method for forwarding address prefix data in an access network. This is done independently of the use of the first identifier, i.e. now the first identifier is optional. By this method at least one of the link message, the SP-LA message or the TLA message is used with or without the first identifier. For the first time it is possible to automatically configure an access network that contains, for instance, access node devices, aggregator node devices and edge node devices. The access node device is especially a device that is connected to a plurality of user devices or user networks, for instance to more than one hundred user devices, including user networks.

The invention also relates to a device according to claim 22.

In the following, embodiments of the invention are illustrated with reference to the Figures, wherein:
- Figure 1: illustrates the format of an IPv6 address and shows address prefixes,
- Figure 2: illustrates the structure of an access network,
- Figure 3: illustrates the format of a link message,
- Figure 4: illustrates the format of a SP-LA message,
- Figure 5: illustrates the format of a TLA message,
- Figure 6: illustrates the message flow in the access network,
- Figure 7: illustrates process steps for updating a prefix data base which includes service identifiers, and
- Figure 8: illustrates the main units of an access node device.

The embodiments are only for illustration purposes and do not restrict the scope of the invention.

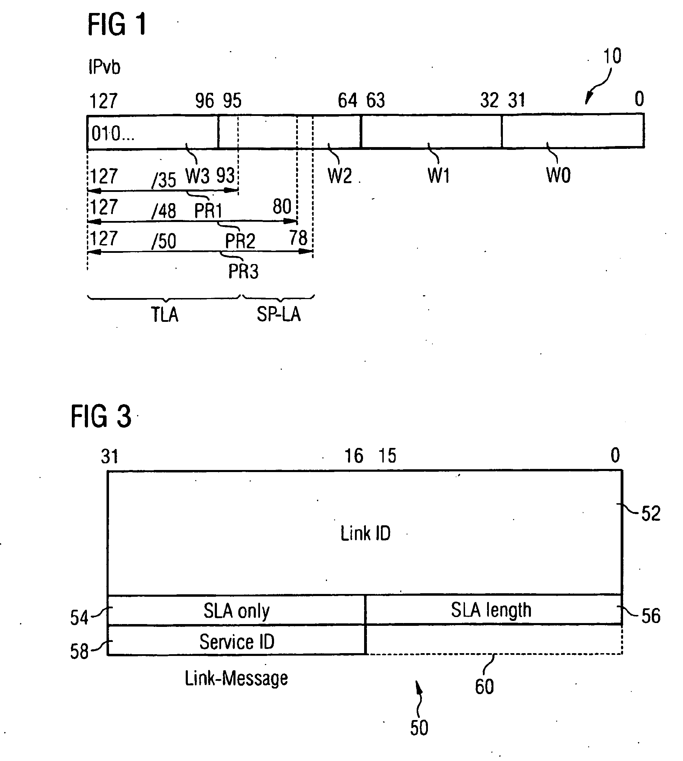

Figure 1 shows the format of an internet address 10. The internet address consists of four words W0 to W3, each word W0 to W3 has a length of 32 bits, for instance. The most significant bit is bit 127 on the left side of the internet address 10. In the embodiment, internet address 10 is an IPv6 address.

Figure 1 also shows an address prefix PR1 with a length of 35 bits. The length is indicated by /35. The prefix PR1 relates to the most significant bits starting from left to right. Prefix PR1 starts with the most significant bit 127 and ends with bit 93. Prefix PR1 is, for instance, a prefix which an internet service provider gets from a regional internet registry (RIR) authority. Prefix PR1 consists of an optional format prefix, a TLA and optionally of reserved bits.

Figure 1 also shows a prefix PR2 with a length of 48 bits indicated by /48. Prefix PR2 includes bit 127 to bit 80. Therefore, prefix PR2 includes a TLA, a NLA and also SLA data. NLA and SLA are referred to as SP-LA in the following. Thus, prefix PR2 contains data, which can be administrated by the service provider itself.

A prefix PR3 contains 50 bits indicated by /50. Prefix PR3 contains bits from position 127 to position 78. Thus, prefix PR3 contains TLA data and SP-LA data.

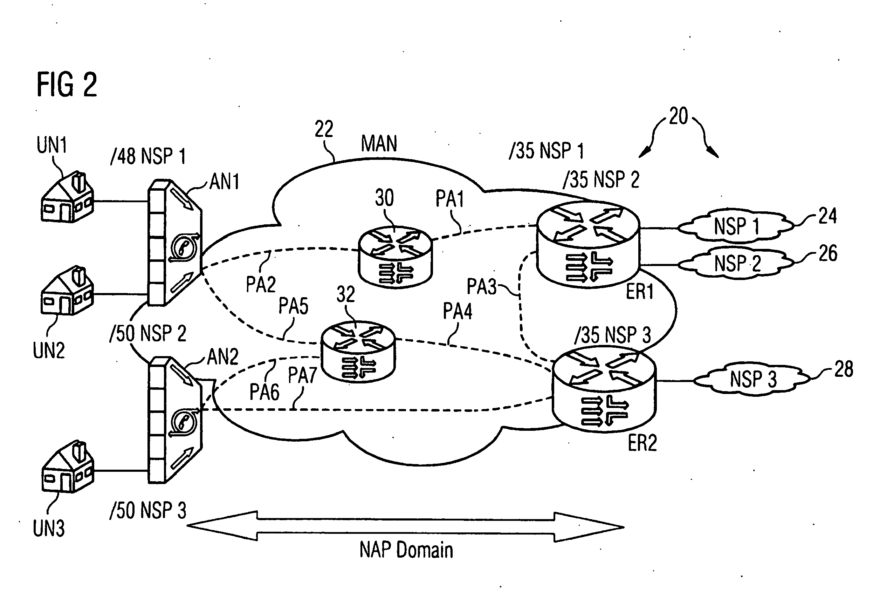

Figure 2 shows the structure of a network 20. Network 20 is a packet transmission network 20, in short called a packet network. The network 20 contains an access network 22 and provider networks, for instance provider network 24 of a first network service provider NSP1, provider network 26 of a second network service provider NSP2 and provider network 28 of a third service provider NSP3. In the example, the network 20 is a network which transmits IP-data (Internet Protocol).

In the embodiment of Figure 2 the access network 22 can be called a MAN (Metropolitan Area Network). For instance the devices of the access network 22 are located in the same town with distances between them in the range of 1 kilometre to 30 kilometre or to 100 kilometre, if it is a big city. The access network 22 contains a plurality of access node devices, whereof two access node devices AN1 and AN2 are shown. The access node devices AN1 and AN2 are, for instance, access nodes hiX 5630 or hiX 5635 produced by Siemens AG. Alternatively, products with the same functionality but of other companies can be used.

A plurality of user devices or user networks are connected to access node device AN1, for instance a user network UN1 and user network UN2. Likewise, a plurality of user devices or user networks are connected to access node device AN2, for instance, user network UN3.

The user networks UN1 to UN3 are connected to the access node devices AN1 or AN2, for instance, by:
- ADSL (Asymmetric Digital Subscriber Line),
- ADSL(2) or ADSL(2+)
- SHDSL (Symmetric High Density DSL) or
- SHDSL(bis)
- VDSL (Very High Data rate DSL) or VDSL2,
- telephone lines,
- fast Ethernet or Giga Ethernet,
- xPON (Passive Optical Network), or
- WiMAX (Worldwide interoperability for Microwave Access).

In the case of DSL the access node devices AN1, AN2 can be called DSLAM (DSL Access Multiplexer). In the embodiment shown in Figure 2, the access network 22 is an Ethernet network. But in other embodiments it is a FDDI network (Fiber Distributed Data Interface) or a token ring network. The access node devices AN1, AN2, AN3 are connected directly or with the help of several aggregator node devices to at least one edge router device or edge node device. In Figure 2 two edge router devices ER1 and ER2 are shown. Two aggregator node devices 30 and 32 are also shown. In the case of an Ethernet access network 22 the aggregator node devices 30, 32 may be devices hiD 6650 of the Siemens AG company. Alternatively, products of other companies but with the same functionality may be used. The edge router devices ER1 and ER2 can be called BRAS (Broadband Remote Access Server) and work, for instance, according to the internet protocol. Functions of the edge router devices ER1 and ER2 may be, for instance:
- identification,
- authentification,
- accounting.

The access node devices AN1, AN2 and the aggregator node devices 30, 32 are layer 2 switches with IP-awareness, for instance, that do not fulfil IP-routing. The edge router devices ER1 and ER2 fulfil routing functions on an IP layer.

The provider networks 24, 26 and 28 contain, for instance, broadband switching units (not shown).

Figure 2 also shows transmission paths PA1 to PA7 for data transmission in the access network. In detail:
- path PA1 between edge router device ER1 and aggregator node 30,
- path PA2 between aggregator node device 30 and access node device 1,
- path PA3 between edge router device ER2 and edge router device ER1,
- path PA4 between edge router device ER2 and aggregator node device 32,
- path PA5 between aggregator node device 32 and access node device AN1,
- path PA6 between aggregator node device 32 and access node device AN2, and
- path PA7 between edge router device ER2 and access node device AN2.

In the example of Figure 2 edge router device ER1 is an edge router device for provider network 24, i.e. for the first internet-network service provider NSP1, and for provider network 26, i.e. for the second network service provider NSP2. Edge router device ER2 is an edge router for provider network 28, i.e. for the third network service provider NSP3. Other edge routers are placed, for instance, in other cities than the access network 22.

The paths PA1 to PA7 are used to transmit or to switch the payload data from user networks UN1 to UN3 to the provider networks 24 to 28 and vice versa. The paths PA1 to PA7 are also used for automatic distribution of prefix data. For instance, a prefix /35 NSP1 of the first network service provider NSP1 is manually or automatically configured for edge router device ER1. Likewise, a prefix /35 NSP2 of the second network service provider NSP2 is available in edge router device ER1. The methods described below are used to automatically distribute prefixes that are derived from prefix /35 NSP1 and /35 NSP2. This is done depending on IDs for the first network service provider NSP1 and for the second network service provider NSP2.

In the example shown in Figure 2, a prefix /48 NSP1 is automatically derived from prefix /35 NSP1 in access node device AN1 as described below in detail. From the prefix /48 NSP1 IP-addresses and sub prefixes are derived and distributed to the user, for instance, to user network UN1, if it is requested.

Likewise, the prefix /50 NSP2 is derived from prefix /35 NSP2 in access node device AN1. From the prefix /50 NSP2 IP-addresses and sub prefixes are derived and distributed to user networks if requested, for instance, to user network UN2.

Access node device AN1 informs the access node device AN2, the aggregator node devices 30, 32, the edge router devices ER1 and ER2 and other network devices of using the prefixes /48 NSP1 and /50 NSP2. This is also discussed in more detail below.

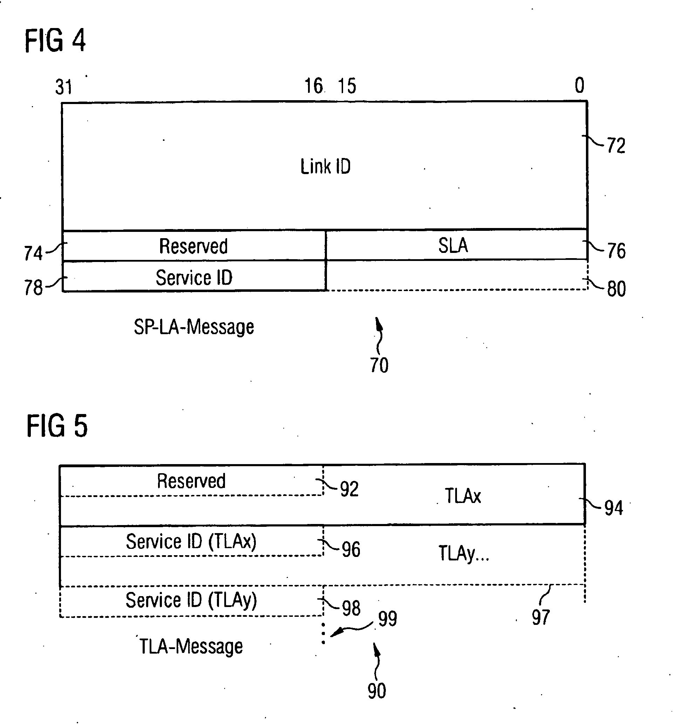

Edge router device ER2 can use a prefix /35 NSP3 of network service provider NSP3 for further distribution. In the example shown in Figure 2 access node device AN2 has derived prefix /50 NSP3 from prefix /35 NSP3. From prefix /50 NSP3 IP-addresses or sub prefixes are derived, for instance for user network UN3. Also for the distribution of prefix /35 NSP3 an identifier (ID) for the third network service provider NSP3 is used, as described below in detail. Access node device AN2 also informs the other network elements of using prefix /50 NSP3 with the help of the messages that are described below with reference to Figures 3 and 4.

Thus, prefixes /35 NSP1, /35 NSP2 and /35 NSP3 have the format of prefix PR1 described with reference to Figure 1 above. Prefix /50 NSP2 has the format of prefix PR2. Prefixes /50 NSP2 and /50 NSP3 have the format of prefix PR3 described with reference to Figure 1.

Three network service providers NSP1 to NSP3 are considered in the example illustrated in Figure 2. The edge router device ER1 is responsible for distributing the prefixes belonging to network service providers NSP1 and NSP2. Edge router device ER2 manages the prefixes of network service provider NSP3. After obtaining the prefixes from a network service provider NSP1 to NSP3, each edge router device ER1, ER2 announces the received prefixes in the access network 22. In this respect access network 22 can be called a no administration protocol (NAP) domain, see for instance "No Administration Protocol (NAP) for IPv6 router auto-configuration", G. Chelius et al, Proceedings of the 19th International Conference on Advanced Information Networking and Applications (AINA'05). In the first example, service provider identifiers are used also for this announcement. In a second example, which is explained later in more detail no such service identifiers are used in the access network 22.

Whenever an access node device AN1, AN2 receives an address/prefix request, it will allocate the necessary address space from a specific service address pool, in compliance to a customer service request, i.e. a request from user networks UN1 to UN3. If no allocation is possible the access node device requests a prefix. The prefix request is announced by NAP procedures to the NAP domain as described below. Thus, a distributed data base gets updated that is distributed over all network devices AN1, AN2, 30, 32, ER1, ER2.

In the example, access node device AN1 has only requested two sub-prefixes from two different network service providers, i.e. NSP1 and NSP2. Therefore, access node device AN1 does not allocate or request any sub-prefix from NSP3, because none of its customers has requested a service of the network service provider NSP3. Nevertheless access node device AN1 knows the TLA's from network service provider NSP3.

Since this protocol is based on a distributed data base, an edge router device ER1, ER2 will always know the address data available for its network service providers. Therefore, if this address base is exhausted, the edge router device ER1, ER2 will request more prefixes from the specific network service providers NSP1 to NSP3. Alternatively it is possible to deliver the prefixes manually to the edge router devices ER1, ER2.

Figure 3 shows the format of a link message 50. The link message 50 is optionally used in the auto configuration process of the access network 22. The link message 50 includes the following data fields 52 to 60:
- Data field 52 contains a link identifier, for instance a MAC address (Medium Access Control). In the example, data field 52 contains four words each of 32 bits. Alternatively, a longer or shorter data field 52 can be chosen.
- Data field 54 contains SLA data and has a length of 16 bits, for instance.
- Data field 56 contains a length value which indicates the length of the SLA data stored in data field 54, for instance the number of bits occupied by the SLA data in data field 54.
- Data field 58 contains a service identifier which identifies a network service provider or a service.
- Optional further data fields 60, for instance one data field 60 with the length of 16 bits.

All link messages 50 with the format shown in Figure 3 have a link flooding scope. A link message 50 is originated for each broadcast link or NBMA link (Non Broadcast Multiple Access) having two or more attached routers of access networks 22, by the link designated router. The message is originated if the link is created. The links to user networks UN1, UN2, UN3 are not such links for which link messages are created, because they are not inside the MAN area. The links to user networks UN1, UN2, UN3 are layer 3 configured with DHCP or with stateless IPv6 auto configuration.

The above mentioned principle of designated routers is the same as in OSPF (Open Shortest Path First). Other methods from OSPF may also be used, for instance, Hallo-messages. The link message 50 contains the IPv6 prefixes assigned to the auto-configured link and its link ID. In the first example, only the SLA part of the prefix is contained in link message 50. The link ID is created by concatenation of the designated router's router ID and the identifier of the designated router interface connected to the link.

The event causing link message 50 to be re-originated or created is the following:
- the IPv6 prefix(es) assigned to the link has (have) changed either because of IPv6 prefix collision or because advertised TLAs have changed; this relates especially to the aspect of auto configuration of access network 22.

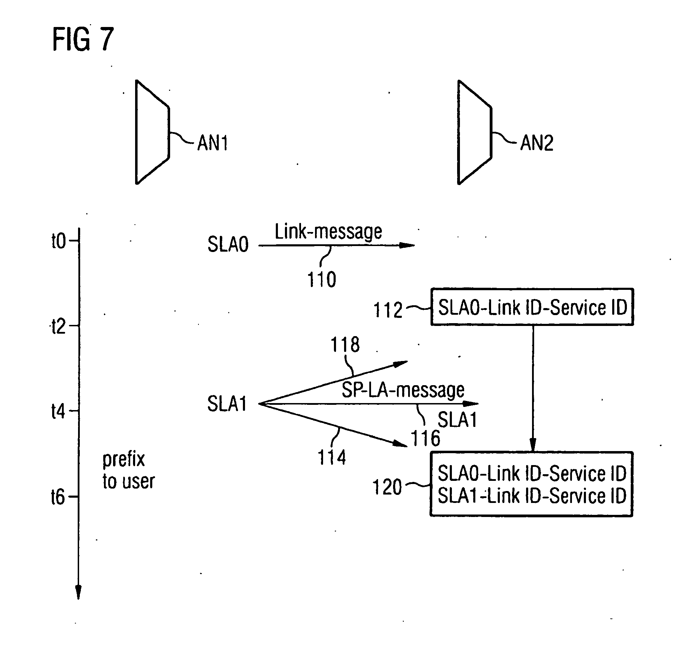

Upon receipt of a link message 50, a router updates the IPv6 prefixes and the link IP of its receiving interface with the received ones. This is explained in more detail with regard to Figure 7 below.

In other examples the data field 52 to 60 are longer or shorter as shown. Data fields 52 to 60 can also be rearranged in a different order. It is also possible to use more than one message to transmit the data of the data fields 52 to 60.

Figure 4 shows the format of a SP-LA message 70. The SP-LA message 70 includes the following data fields 72 to 80:
- Data field 72 contains the link ID. In the embodiment data field 72 corresponds to data field 52 of the link message 50.
- Data field 74 is optional and contains 16 reserved bits, for instance,
- Data field 76 contains SLA data. In the example data field 76 has a length of 16 bits. The definition of the number and size of the prefixes that each router requires per service, may be configured manually, or be based on a default value per service and per port, or be based on the requests the router receives. Therefore, different length for different services or service providers may be or are used.
- Data field 78 contains a service identifier. Data field 78 has a length of 16 bits and corresponds to data field 58 of link message 50.
- Further data fields 80 which are optional, for instance, one data field 80 with a length of 16 bits.

SP-LA messages 70 have a site flooding scope, i.e. they are flooded into the whole access network 22. A SP-LA message 70 is originated for every broadcast link or NBMA (Non Broadcast Multiple Access) link having two or more attached routers, by the designated router of the link. The SP-LA message 70 contains the same information as the corresponding link message 50, i.e., it advertises the IPv6 prefixes or part of IPv6 prefixes assigned to the link and its link ID.

The SP-LA message 70 is also originated if an access node device AN1, AN2 requests for a prefix. It is possible to use the SP-LA message 70 only for this purpose.

The events causing SP-LA messages 70 to be created are the following:
- the IPv6 prefix(es) assigned to the link has (have) changed either because of IPv6 prefix collision or because the advertised TLAs have changed; this relates to the aspect of auto configuration of access network 22,
- an access node device requires a prefix for a specific service identifier; this relates to the aspect of automatic prefix delegation to users.

Both aspects can be used independently of one another.

Upon receipt of a SP-LA message 70 a network device first removes from its data base any older entry with the same link ID. Secondly, for each of its interfaces it compares the received IPv6 SLA, Service ID and link ID with its own interface SLA, Service ID and link IDs. There is a collision if the link IDs differ and if two IPv6 prefixes are equal, this is called collision detection.

In the case of a collision, a designated router renumbers its link prefixes if its link ID is smaller than the received one. Renumbering is done randomly, for instance. The new prefix must not already be present in any SP-LA message of the data base. This is called collision avoidance.

Upon receipt of a SP-LA message 70 a network device updates its data base.

After sending of a SP-LA message 70 a network device waits for a predetermined time to allow for collision detection. If no conflicting SP-LA message is received during this predetermined time the requested prefix can be used for allocation. If a collision is detected a new prefix has to be selected, for instance by the access node device which has the smaller link ID.

In other examples the SLA data field 76 and/or the service identifier data field 78 are longer or shorter as shown. In other embodiments the complete prefix is included in the SP-LA message. It is also possible to use other identifiers than a link ID. Data fields 72 to 80 can also be rearranged in a different order. It is also possible to use more than one message to transmit the data of the data fields 72 to 80.

The usage of SP-LA messages is described below with reference to Figure 7 in more detail.

Figure 5 shows the format of a TLA message 90. The TLA message 90 contains the following data fields 92 to 99:
- Data field 92 has a length of 16 bits. The data field 92 is optional and contains reserved bits for further applications.
- Data field 94 contains a TLA that should be distributed. In the example the data field 94 has a length of 48 bits.
- Data field 96 contains a service identifier that indicates the service or provider that is connected to the TLA of data field 94. In the example data field 96 has a length of 16 bits.
- Optional data field 97 contains a second TLA with the same structure and function like data field 94,
- Optional data field 98 contains a service identifier that identifies the service or the service provider that owns the TLA in data field 97. Data field 98 has the same structure and function like data field 96.
- Further optional data fields 99 contain for instance further TLAs and service identifiers.

In other examples no reserved data field 92 is contained in TLA message 90. In other examples the TLA data fields 94, 97 and the service ID data fields 96, 98 may be longer or shorter as shown. Data fields 92 to 99 can also be rearranged in a different order. It is also possible to use more than one message to transmit the data of the data fields 92 to 99.

TLA messages 90 have a site flooding scope, i.e. they are distributed in the access network 22. A TLA message 90 is originated for all edge routers and all access node devices by the corresponding edge router ER1, ER2. A TLA message lists the TLA provided by the service provider, for instance the internet service provider, to the edge router ER1, ER2.

The event causing TLA messages 90 to be created is the following:
- one or several TLAs provided by the internet service providers ISP(s) or network service providers NSP1, NSP2, NSP3 to the edge router devices ER1, ER2 have changed or are added; this relates to both aspects, i.e. the auto configuration of the access network and the automatic prefix delegation to users. Both aspects can be used independently of one an other.

Upon receipt of a TLA message, a router or network device adds all received TLAs to the TLA lists of all its interfaces. This is the first step for creating a valid prefix to be assigned by normal IPv6 auto configuration mechanism or by means of DHCP. If there is a change in the list of advertised TLAs, designated routers modify the IPv6 of their link according to the changes of the TLA list. A change can be detected because only the TLA changes but the Service ID remains unchanged.

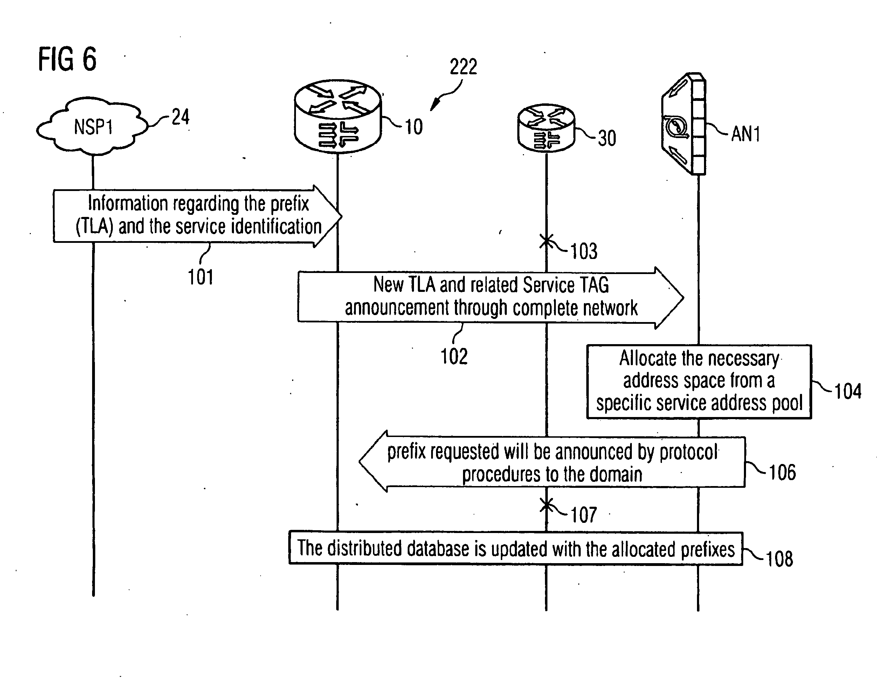

The usage of the TLA message 90 is explained below with reference to Figures 6 and 7 in more detail.

To provide more details of the protocol, the different steps taken by the protocol depending on the topology changes that can occur in an auto configured network are explained in the following. The usage of a distributed method leads to some properties that may be necessary in the access network, especially for the auto configuration aspect:

Link creation: When a link is created a designated router election takes place. In parallel with this, all network devices synchronize their data base with the one of the network. After the selection and for each TLA available in the TLA list the designated router randomly chooses a sub-net ID value in the address space made available by the TLA space minus the already allocated subnet IDs for this TLA in the network. Given the TLA and the subnet ID, the designated router creates a link message, a SP-LA message and updates its own data base.

Addition of a router: When a new router connects to a link, it first synchronizes its data base with the data base of the designated router of the link. The new router gets the link IPv6 prefixes value and the link ID given by the designated router to the link. Then the new router checks for collision with its other links. If a collision occurs with regard to some of its other links, the designated router(s) of the links with the smallest link IDs will renumber their prefixes.

In the rare case of merging of two auto-configured access networks: When several auto-configured access networks of the same network provider or of different network providers merge, the protocol synchronizes the data bases of all routers. In consequence, all routers receive the list of all IPv6 prefixes allocated in the whole network. In case of a conflict, if two or more links have the same prefix, the designated routers of the conflicting links with the smallest link IDs will have to renumber their prefixes. This is done in an effective way by considering the service Identifiers which are stored in the data base and which belong to specific prefixes. Thus it is no problem to merge access networks of the same provider or of different providers.

Disconnection of a router: Disconnection of a router has no practical consequence except if the router was a designated router on the link which it is disconnected from. In this case the designated router election is reprocessed and the link is renumbered. Disconnection of a router may also lead to the split of the network into two auto-configured networks.

Split into several auto-configured access networks: When several auto-configured access networks split, the messages associated to each network will time out in the data base of the other networks. Prefixes allocated in one of the networks are made available in the other ones while the network messages time out. This is done with the help of the identifiers. Thus, an access network of one network provider can be split from a network of this provider or from networks of other providers.

Multi-homing: If an access network is multi homed as the access network 20 each edge router ER1, ER2 will propagate inside the network the prefix (which are the TLA's). Network access devices will run several times the collision detection algorithm related to prefix distribution to uses to maintain the uniqueness of the global prefix.

And especially for the prefix distribution aspect to user devices or user networks:
Allocation of a prefix for a user network: When an access node desires to allocate a prefix to support one service, the access node consults its local image of the database and checks which prefixes are available and not used (taken by other access nodes) for that specific service, identified by the service TAG or ID. Once the prefix has been chosen, the reservation of that prefix is announced to the rest of the NAP domain by sending SP-LA messages containing both the prefix and the service TAG.

Figure 6 shows the message flow in the access network 22. In the example shown information regarding the prefix, i.e. the TLA and the service identifier are sent from network 24 to the edge router device ER1. This is done usually by an administrator. In some cases the service provider network 24 and the access network 22 can belong to the same auto-configuring area. In these cases a TLA message can be used in step 101.

If edge router device ER1 has received a new TLA, it updates its data base. The update is distributed in the access network 22 with the help of TLA messages 90 that are flooded through the complete access network 22, see step 102. That means that a TLA message 90 will be received in aggregator node device 30, for instance see cross 103, and in access node device AN1, for instance. Both devices 30, AN1 update their data bases.

In step 104 access node device AN1 allocates the necessary address space from a specific service address pool for user networks UN1 and UN2, i.e. under consideration of service identifiers. This allocation is stored in the data base of access node AN1. Furthermore, if allocation is not possible because access node device AN1 needs a new prefix for itself it requests prefixes by the protocol procedures mentioned above. This request is distributed to the whole domain, i.e. to the whole access network, see step 106. For this purpose, SP-LA messages 70 are used. These messages will be received, for instance, in aggregator node device 30 and also in edge router device ER1.

Finally, the distributed data base is updated with the requested prefixes, see step 108. The updated distributed data base is considered, if further prefixes should be requested by access node device AN1 or access node device AN2 for user networks UN1 to UN3 or for user devices. Furthermore, this data base is used, if the access network 22 is changed in the case that auto configuration is used. In the first example the service identifiers are related to the prefixes. In the second example such service identifiers are not used but may be used. This is explained in more detail below.

Figure 7 shows process steps for updating a local prefix data base 112 in access node AN2 thereby using service identifiers. The local prefix data base 112 is part of the distributed data base. It is supposed that at time t0 a link between access node device AN1 and access node device AN2 is established. The link gets the prefix part SLA0. This part SLA0 or the complete prefix of the link is sent from access node device AN1 to access node device AN2 with the help of the link message 110 which has the format of link message 50.

At time t2 access node device AN2 receives the link message 110 and processes the data included into this link message 110. Thereby it updates a locally stored table 112 with the part SLA0 of the prefix or with the complete prefix, with the link ID given in link message 110 and with the service ID given in link message 110. this is especially related to the auto configuring aspect. therefore is possible to update only an interface data field but not the distributed data base.

It is supposed that the user network UN1 requests an IP-address or a sub prefix from access node device AN1. The IP-address or the sub prefix is for a special service identified by a service ID. Access node device AN1 checks if it has already reserved or requested a prefix for this purpose. If such a prefix is reserved for access node device AN1 the access node device AN1 uses this prefix to derive the IP-address or the sub prefix. This is called the allocation. In this case no message is sent to the access network 22.

If such a prefix is not reserved for access node device AN1, the access node device AN1 reserves such a prefix with the help of a SP-LA message. Before access node device AN1 allocates, i.e. uses, the prefix it waits for a predetermined time to allow a collision detection with regard to the prefix. If no collision is detected the prefix can be allocated. If a collision is detected the access node device with the lower link ID has to request an other prefix.

The prefix, that is forwarded to user network UN1 includes a prefix part SLA1 that is defined by the access node AN1 and, therefore, by the respective network service providers NSP1 or NSP2. If the user network UN1, UN2 requests a service from network service provider NSP1, this is stored in the data base of access node device AN1. If the service is requested from another service provider NSP2 or NSP3, this is accordingly stored together with the SLA1 in the data base of access node AN1. Before this, access node AN1 distributes this information with the help of SP-LA messages 70 to all edge routers and to the other access nodes, see SP-LA messages 114 to 118. Especially, an SP-LA message 116 is sent to access node AN2. After receiving the SP-LA message 160, the access node AN2 processes the data fields of this message and updates its data base.

As shown in Figure 7, at time t6 access node AN2 stores the SLA 1, the link ID, and the service ID that are contained in the SP-LA message 116. Therefore, the updated table 120 or data base contains two entries in the example.

Likewise, access node device AN1 updates its table if it receives link messages 50, SP-LA messages 70 or TLA messages 90 from other network devices. In the example shown in Figure 7 one data base or table is used for all service IDs.

In other examples the complete prefixes are stored together with the service IDs. In other examples the link IDs are not stored.

As described below it is also possible to use the link message 50, the SP-LA message 70 and the TLA message 90 without service identifiers in the access network 22. Furthermore it is possible to use this messages 50, 70 and 90 independent of prefix delegation to users done manually or automatically.

In summary a method is proposed to perform automatic prefix splitting and distribution in the MAN with multi-service awareness, especially for IPv6, allowing the configuration of end-hosts and intermediates routers.
The solution is based on a no administration protocol and especially on the following features:
- The distributed data base includes service identifiers (service TAG or service ID) that associate each prefix to the respective service.
- Preferably all messages 50, 70, 90 which are used to build the distributed data base send with each requested prefix to be split (e.g. Top Level Aggregator (TLA) plus SLA) the information of the respective service TAG or ID.
- When a router desires to allocate a prefix to support one service, the router consults its local image of the data base and checks which prefixes are available and not used (taken by other routers) for that specific service, identified by the service TAG. Once the prefix has been chosen, the reservation of that prefix is announced to the rest of the NAP domain by sending LSAs (Link State Advertisements), i.e. message 70 containing both the prefix and the service TAG or ID.
- The definition of the number and size of the prefixes that each router requires per service, may be configured manually, or be based on a default value per service and per port, or be based on the requests the router receives. Requesting only the prefixes necessary to respond to present demands, the addressing space for one service will not be wasted. The routers become aware of the address/prefix requests for each of their ports by methods such as router solicitation from hosts using stateless auto configuration or DHCP (Dynamic Host Control Protocol), see for instance IETF (Internet Engineering Task Force) RFC (Request For Comment) 3633, December 2003, or by prefix requests using DHCP-PD (Prefix Delegation), see for instance IETF RFC 3769 or RFC 3633.
- The Edge Router (ER, ER1, ER2) which is responsible for distributing the prefixes to be split per service in the no administration protocol domain, will be aware of the already reserved sub-prefixes for each prefix for each service. When the edge router device ER, ER1, ER2 becomes aware that all sub-prefixes of one service are reserved by the routers of the NAP, it needs to request new prefixes for that service. The new prefixes may be provided by management actions or automatically requested to the appropriate entities (e.g. NSP) by mechanisms such as DHCP-PD.

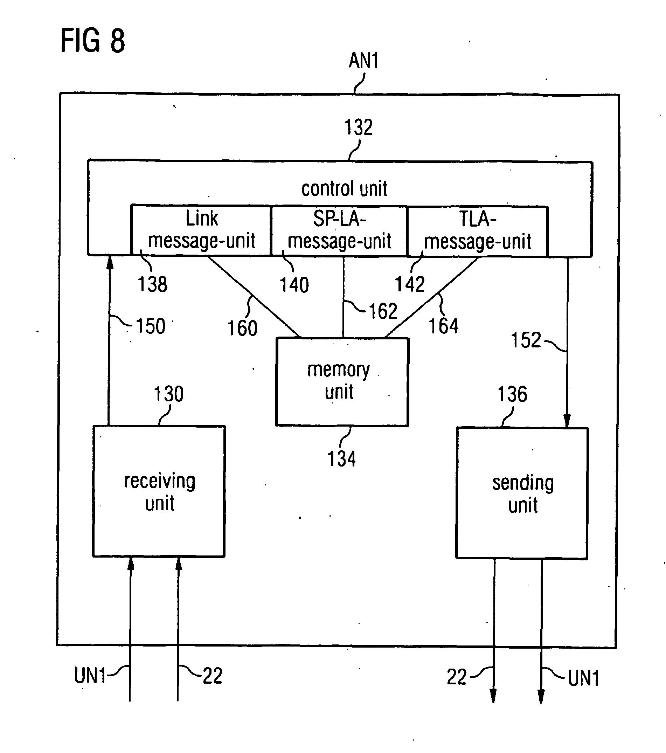

Figure 8 shows the main units of the access node device AN1. Similar units are also included in the other network devices of access network 22 which are auto-configured. Access node AN1 comprises:
- a receiving unit 130 for receiving data and messages from user devices or user networks, for instance from user network UN1 and from the access network 22,
- a control unit 132 for controlling the operation of access node AN1,
- a memory unit 134 for storing the data base,
- a sending unit 136 for sending messages to the access network 22 or to the user networks, for instance to user network UN1.

The control unit 132 comprises:
- a link message unit 138 for processing and creating link messages 50,
- a SP-LA message unit 140 for processing and creating SP-LA messages 70, and
- a TLA message unit 142 for processing TLA messages 90.

Receiving unit 130 forwards the received data to control unit 132, see arrow 150. In the other direction the control unit 132 forwards the data that should be sent to the sending unit 136, see arrow 152. The link message unit 138, the SP-LA message unit 140 and the TLA message unit 142 have access to the memory unit 134, see lines 160, 162 and 164.

The access node device AN1 performs the methods described with reference to Figures 1 to 7. The access node device AN1 may be implemented using a processor and software. Alternatively, access node device AN1 may be implemented using only circuitry and no software.

In another embodiment the link message 50, the SP-LA message 70 and the TLA message 90 do not include a service identifier 58, 78, 96. This is no problem if there is only one service provider or only one service in the access network 22. If there are more than one services and/or network providers the problems that arise can be tackled by using other methods than using a service identifier. These other methods, may be, are not so effective with regard to the efficient use of the prefix address space. Nevertheless these methods may be used. Furthermore it is possible to use this messages 50, 70 and 90 independent of prefix delegation to users done manually or automatically.

On the other hand, the use of the proposed messages with the service identifiers is also useful in home network or in a company network, i.e. in networks that are connected to an access network but are no access networks itself.

The explained methods can be summarized as follows. A MAN address auto configuration mechanism capable of splitting and distributing multi-service prefixes is provided. This does not only solve the problem of support of different services or service providers but also decreases the number of required administration operations which translate into OPEX (OPEerational expenditure) savings. The mechanism presented is not a centralized solution, which depends on a single device; instead it represents a solution where a distributed data base is used to keep the information regarding the address space availability.

By distributing and configuring prefixes conforming the service requirements it is possible for the access node device AN to allocate only prefixes belonging to the service that it needs. This solution results in procedures with service-awareness, which may be or is a requirement in environments where multiple network service providers NSP are present. The examples of the Figures 1 to 8 illustrate this behaviour, where AN1 receives access requests from clients of NSP1 and NSP2. Therefore AN1 only allocates and requests address space, for instance IPv6 prefixes, belonging to these two network service providers NSP1 and NSP2. AN1 does not allocate or even request address space from network service provider NSP3. Whenever a prefix requested by an AN gets to exhaustion, it needs to reserve more address space, this is done by simply requesting more prefixes from the required specific service by that access node AN.

Due to the complexity of Metro Area Networks (MAN), the group of functions needed by administrators to support the configuration process is of particular importance. Configuration tasks such as IP address and prefix delegation, management of prefix distribution, and router configuration, are a major component of operations performed in the MAN. The proposed methods do not only allow automatic splitting of IPv6 network prefixes and combine this with prefix distribution in routers, but support also differentiated behaviour on a per service basis in multiple-service enabled MAN environments, such as having separated pools of address prefixes for each Network Services Providers (NSP) supported in the same access network, or even having separate pools of prefixes for the same NSP for different services, for instance, for enterprise accesses and for residential customers accesses.

The technical solutions proposed here allow automatic prefix splitting and distribution, supporting multiple services in the MAN, in order to simplify and to ease MAN operation and management activities.

The proposed solution is preferred to other solutions. For instance the issue of assigning prefixes to elements of a core network can be done by implementing mechanisms based on DCHP-PD functions. The main drawbacks of DHCP-PD are:
- It is a centralized solution, based on the client/server paradigm;
- The DHCP server needs to be provided with a set of prefixes to assign; this can be done either manually or using automatically triggered configuration scripts;
- Since there is a prefix splitting performed independently of the prefix distribution, the prefix splitting may result in a non efficient IP address space utilization.
   However, it is possible to support also an association between prefixes and a unique service by using service identifiers, i.e., the no administration protocol which uses service identifiers and supports service-awareness. Service here is meant as access to a specific NSP, for instance. Without service awareness, each no administration protocol router distributes address space dependently of the NSP that the subscriber is associated with. In other words, it might therefore not happen that a subscriber from NSP1 also receives IP information, for instance IPv6 addresses or prefixes, from NSP2. If NSP2 does not have a proper security infrastructure in place, then the subscriber nevertheless may not be able to use IP connectivity by means of NSP2, without really being authorized to do so. There is therefore the possibility that one router allocates different amounts of sub-prefixes per service (e.g. per NSP), and that the router can ignore newly announced prefixes in the NAP domain if it does not require more addressing space for the specific service of that prefix.

In connection with an access network that has only IP-awareness incorporation by reference is made, for instance, to:
- WO 2005/112363 A1, especially to logical service interfaces like: VLAN (Virtual Local Area Network), MPLS (Multi Protocol Label Switching), special VLAN,
- WO 2006/018420, and
- F. Fredicx, "D A2.2 - Network architecture and functional specifications for the multi-service access and edge", IST MUSE, January 2005, especially pages 126 to 138 (MPLS, End to End connectivity) and pages 189 to 195 (Prefix delegation with DHCPv6).

## Claims

1. Method for forwarding address prefix data in an access network (22) having a plurality of network devices (AN1, AN2, ER1, ER2),
comprising the steps of
creating a message (50, 70, 90) in one of the network devices (AN1, AN2, ER1, ER2),
distributing the message (50, 70, 90) in the access network (22) to the other network devices (AN1, AN2, ER1, ER2), **characterized in**
**that** the message comprises address prefix data (54, 76, 94) and a first identifier (58, 78, 96) which relates to a service available in the network (22), and
**that** the message is created automatically if the address prefix assigned to a link or interface of the network has changed.

2. The method according to claim 1, wherein the address prefix data (56) includes a part (SP-LA) of the prefix (P2, P3) which can be administrated by the provider (NSP)

3. The method according to claim 1, wherein the message (50, 70) includes a part of the prefix which is unchangeable for the provider (NSP).

4. The method according to one of the claims 2 or 3, wherein the message comprises a second identifier (52, 72) identifying a link or an interface.

5. The method according to claim 4, wherein the first message (50) is distributed only on a single link between two network devices (AN1, AN2).

6. The method according to claim 5, wherein the first message (50) includes length data (56),
the value of the length data (56) is equal to the length of the part (SP-LA) of the prefix (P2, P3) which can be administrated by the provider (NSP).

7. The method of one of the claims 5 or 6, wherein a further network device (AN2) receives the first message (50), wherein the further network device (AN2) stores the address prefix data (54) together with the corresponding first identifier (58) in a data base (112).

8. The method of one of the claims 5 to 7, wherein the data base (112) is used for allocating and/or requesting new prefixes or parts of prefixes depending on a first identifier (58) which also relates to a service available in the network (22) or to a provider (NSP).

9. The method of claim 7, wherein a receiving network device updates the prefix of its receiving link or interface using the address prefix data (54).

10. The method according to one of the claims 2 to 4, wherein a second message (70) is sent, and
the second message (70) is sent if the address prefix assigned to a link or interface of the network device (AN1) has changed.

11. The method according to claim 10, wherein the second message (70) is distributed to more than one network device (AN2, 30).

12. The method of claim 10 or 11, wherein a further network device (AN2) receives the second message (70),
wherein the further network device (AN2) stores the address prefix data (76) together with the corresponding first identifier (78) in a data base (112, 120).

13. The method of claim 7, wherein the data base (112, 120) is used for allocating and/or requesting new prefixes or part of prefixes depending on an identifier which also relates to a service available in the network (22) or to a provider (NSP).

14. The method according to claim 1, wherein the message is a third message (90), and
wherein the address prefix data (94) include a part of the prefix which is unchangeable for the provider (NSP).

15. The method of claim 14, wherein the third message (90) is sent if at least one top level aggregator (TLA) is changed or added.

16. The method of one of the claims14 or 15, wherein the third message (90) is distributed to more than one network device (AN1, ER1).

17. The method of one of the claims 14 to 16, wherein a further network device (AN2) receives the third message (90),
and
wherein the further network device (AN2) stores the address prefix data and the first identifier in a data base.

18. The method of claim 17, wherein the data base is used for allocating and/or requesting new prefixes or parts of prefixes depending on an identifier which also relates to a service available in the network (22) or to a provider (NSP1, NSP2).

19. The method of claim 7, wherein the data base is also used for modifying the address prefixes of links according to the changes of the data base.

20. The method of one of the preceding claims, wherein the first identifier identifies an internet service provider, an application service provider or one of the following services:
voice over internet protocol,
video transmission,
internet access.

21. The method of one of the preceding claims, wherein the method uses messages that are defined for synchronizing data bases in an open shortest path fist method (OSPF).

22. A device (AN1, 30, ER1) comprising means for performing all of the steps of a method according to one of the claims 1 to 21.

## Patentansprüche

1. Verfahren zur Weiterleitung von Adress-Präfixdaten in einem Zugangsnetz (22) mit einer Mehrzahl von Netzvorrichtungen (AN1, AN2, ER1, ER2),
umfassend die Schritte von
Erstellen einer Nachricht (50, 70, 90) in einer der Netzvorrichtungen (AN1, AN2, ER1, ER2),
Verteilen der Nachricht (50, 70, 90) im Zugangsnetz (22) zu den anderen Netzvorrichtungen (AN1, AN2, ER1, ER2), **gekennzeichnet dadurch, dass**
die Nachricht Adress-Präfixdaten (54, 76, 94) und eine erste Kennung (58, 78, 96) umfasst, die sich auf einen in dem Netz (22) verfügbaren Dienst bezieht, und
die Nachricht automatisch erstellt: wird, wenn sich das einer Verbindungsstrecke oder Schnittstelle des Netzes zugewiesene Adress-Präfix geändert hat.

2. Verfahren nach Anspruch 1, wobei die Adress-Präfixdaten (56) einen Teil (SP-LA) des Präfixes (P2, P3) enthalten, der durch den Betreiber (NSP) verwaltet werden kann.

3. Verfahren nach Anspruch 1, wobei die Nachricht (50, 70) einen Teil des Präfixes enthält, der für den Betreiber (NSP) unveränderlich ist.

4. Verfahren nach einem der Ansprüche 2 oder 3, wobei sie Nachricht eine zweite, eine Verbindungsstrecke oder eine Schnittstelle kennzeichnende Kennung (52, 72) umfasst.

5. Verfahren nach Anspruch 4, wobei die erste Nachricht (50) nur auf einer einzelnen Verbindungsstrecke zwischen zwei Netzvorrichtungen (AN1, AN2) verteilt wird.

6. Verfahren nach Anspruch 5, wobei die erste Nachricht (50) Längendaten (56) enthält, der Wert der Längendaten (56) gleich der Länge des Teils (SP-LA) des Präfixes (P2, P3) ist, der durch den Betreiber (NSP) verwaltet werden kann.

7. Verfahren nach einem der Ansprüche 5 oder 6, wobei eine weitere Netzvorrichtung (AN2) die erste Nachricht (50) empfängt, wobei die weitere Netzvorrichtung (AN2) die Adress-Präfixdaten (54) zusammen mit der entsprechenden ersten Kennung (58) in einer Datenbank (112) speichert.

8. Verfahren nach einem der Ansprüche 5 bis 7, wobei die Datenbank (112) zum Zuteilen und/oder Anfordern neuer Präfixe oder Teile von Präfixen in Abhängigkeit von einer ersten Kennung (58) benutzt wird, die sich auch auf einen im Netz (22) verfügbaren Dienst oder einen Betreiber (NSP) bezieht.

9. Verfahren nach Anspruch 7, wobei eine empfangende Netzvorrichtung das Präfix ihrer empfangenden Verbindungsstrecke oder Schnittstelle unter Verwendung der Adress-Präfixdaten (54) aktualisiert.

10. Verfahren nach einem der Ansprüche 2 bis 4, wobei eine zweite Nachricht (70) gesendet wird und die zweite Nachricht (70) gesendet wird, wenn sich das einer Verbindungsstrecke oder Schnittstelle der Netzvorrichtung (AN1) zugewiesene Adress-Präfix geändert hat.

11. Verfahren nach Anspruch 10, wobei die zweite Nachricht (70) zu mehr als einer Netzvorrichtung (AN2, 30) verteilt wird.

12. Verfahren nach Anspruch 10 oder 11, wobei eine weitere Netzvorrichtung (AN2) die zweite Nachricht (70) empfängt,
wobei die weitere Netzvorrichtung (AN2) die Adress-Präfixdaten (76) zusammen mit der entsprechenden ersten Kennung (78) in einer Datenbank (112, 120) speichert.

13. Verfahren nach Anspruch 7, wobei die Datenbank (112, 120) zum Zuteilen und/oder Anfordern neuer Präfixe oder Teile von Präfixen in Abhängigkeit von einer Kennung benutzt wird, die sich auch auf einen im Netz (22) verfügbaren Dienst oder auf einen Betreiber (NSP) bezieht.

14. Verfahren nach Anspruch 1, wobei die Nachricht eine dritte Nachricht (90) ist, und
wobei die Adress-Präfixdaten (94) einen Teil des Präfixes enthalten, der für den Betreiber (NSP) unveränderlich ist.

15. Verfahren nach Anspruch 14, wobei die dritte Nachricht (90) gesendet wird, wenn sich mindestens ein Verdichter oberster Stufe (TLA - Top Level Aggregator) geändert hat oder zugefügt wird.

16. Verfahren nach einem der Ansprüche 14 oder 15, wobei die dritte Nachricht (90) zu mehr als einer Netzvorrichtung (AN1, ER1) verteilt wird.

17. Verfahren nach einem der Ansprüche 14 bis 16, wobei eine weitere Netzvorrichtung (AN2) die dritte Nachricht (90) empfängt, und
wobei die weitere Netzvorrichtung (AN2) die Adress-Präfixdaten und die erste Kennung in einer Datenbank speichert.

18. Verfahren nach Anspruch 17, wobei die Datenbank zum Zuteilen und/oder Anfordern von neuen Präfixen oder Teilen von Präfixen in Abhängigkeit von einer Kennung benutzt wird, die sich auch auf einen im Netz (22) verfügbaren Dienst oder auf einen Betreiber (NSP1, NSP2) bezieht.

19. Verfahren nach Anspruch 7, wobei die Datenbank auch zum Abändern der Adress-Präfixe von Verbindungsstrecken entsprechend den Änderungen der Datenbank benutzt wird.

20. Verfahren nach einem der vorhergehenden Ansprüche, wobei die erste Kennung einen Internet-Diensteanbieter, einen Anwendungsdiensteanbieter oder einen der folgenden Dienste kennzeichnet:
Sprachübertragung per Internet-Protokoll,
Videoübertragung,
Internet-Zugriff.

21. Verfahren nach einem der vorhergehenden Ansprüche, wobei das Verfahren Nachrichten verwendet, die zum Synchronisieren von Datenbanken in einem Verfahren den kürzesten Weg zuerst öffnen (OSPF - Open Shortest Path First) definiert sind.

22. Vorrichtung (AN1, 30, ER1) umfassend Mittel zum Durchführen aller Schritte eines Verfahrens nach einem der Ansprüche 1 bis 21.

## Revendications

1. Un procédé de transmission de données de préfixe d'adresse dans un réseau d'accès (22), possédant une pluralité de dispositifs de réseau (AN1, AN2, ER1, ER2),
comprenant les opérations suivantes :
la création d'un message (50, 70, 90) dans un des dispositifs de réseau (AN1, AN2, ER1, ER2),
la diffusion du message (50, 70, 90) dans le réseau d'accès (22) aux autres dispositifs de réseau (AN1, AN2, ER1, ER2), **caractérisé en ce que**
le message contient des données de préfixe d'adresse (54, 76, 94) et un premier identifiant (58, 78, 96) qui se rapporte à un service disponible sur le réseau (22), et
le message est créé automatiquement si le préfixe d'adresse attribué à un lien ou une interface du réseau a changé.

2. Le procédé selon la revendication 1, dans lequel les données de préfixe d'adresse (56) comprennent une partie (SP-LA) du préfixe (P2, P3) qui peut être administrée par le fournisseur (NSP).

3. Le procédé selon la revendication 1, dans lequel le message (50, 70) comprend une partie du préfixe qui est non modifiable pour le fournisseur (NSP).

4. Le procédé selon l'une quelconque des revendications 2 ou 3, dans lequel le message contient un deuxième identifiant (52, 72) identifiant un lien ou une interface.

5. Le procédé selon la revendication 4, dans lequel le premier message (50) est diffusé uniquement sur un seul lien entre deux dispositifs de réseau (AN1, AN2).

6. Le procédé selon la revendication 5, dans lequel le premier message (50) contient des données de longueur (56),
la valeur des données de longueur (56) est égale à la longueur de la partie (SP-LA) du préfixe (P2, P3) qui peut être administrée par le fournisseur (NSP).

7. Le procédé selon l'une quelconque des revendications 5 ou 6, dans lequel un autre dispositif de réseau (AN2) reçoit le premier message (50), dans lequel l'autre dispositif de réseau (AN2) place les données de préfixe d'adresse (54) conjointement avec le premier identifiant correspondant (58) dans une base de données (112).

8. Le procédé selon l'une quelconque des revendications 5 à 7, dans lequel la base de données (112) est utilisée pour attribuer et/ou demander de nouveaux préfixes ou parties de préfixes dépendant d'un premier identifiant (58) qui est également en rapport avec un service disponible sur le réseau (22) ou avec un fournisseur (NSP).

9. Le procédé selon la revendication 7, dans lequel un dispositif de réseau de réception actualise le préfixe de son lien de réception ou de son interface au moyen des données de préfixe d'adresse (54).

10. Le procédé selon l'une quelconque des revendications 2 à 4, dans lequel un deuxième message (70) est envoyé, et
le deuxième message (70) est envoyé si le préfixe d'adresse attribué à un lien ou une interface du dispositif de réseau (AN1) a changé.

11. Le procédé selon la revendication 10, dans lequel le deuxième message (70) est diffusé à plus d'un dispositif de réseau (AN2, 30).

12. Le procédé selon la revendication 10 ou 11, dans lequel un autre dispositif de réseau (AN2) reçoit le deuxième message (70).
dans lequel l'autre dispositif de réseau (AN2) place les données de préfixe d'adresse (76) conjointement avec le premier identifiant correspondant (78) dans une base de données (112, 120).

13. Le procédé selon la revendication 7, dans lequel la base de données (112, 120) est utilisée pour attribuer et/ou demander de nouveaux préfixes ou parties de préfixes dépendant d'un identifiant qui est également en rapport avec un service disponible sur le réseau (22) ou avec un fournisseur (NSP).

14. Le procédé selon la revendication 1, dans lequel le message est un troisième message (90) et
dans lequel les données de préfixe d'adresse (94) contiennent une partie du préfixe qui est non modifiable pour le fournisseur (NSP).

15. Le procédé selon la revendication 14, dans lequel le troisième message (90) est envoyé si au moins un agrégateur de niveau supérieur (TLA) est modifié ou ajouté.

16. Le procédé selon l'une quelconque des revendications 14 ou 15, dans lequel le troisième message (90) est diffusé à plus d'un dispositif de réseau (AN1, ER1).

17. Le procédé selon l'une quelconque des revendication 14 à 16, dans lequel un autre dispositif de réseau (AN2) reçoit le troisième message (90) et
dans lequel l'autre dispositif de réseau (AN2) place les données de préfixe d'adresse et le premier identifiant dans une base de données.

18. Le procédé selon la revendication 17, dans lequel la base de données est utilisée pour attribuer et/ou demander de nouveaux préfixes ou parties de préfixes dépendant d'un identifiant qui est également en rapport avec un service disponible sur le réseau (22) ou avec un fournisseur (NSP1, NSP2) .

19. Le procédé selon la revendication 7, dans lequel la base de données est également utilisée pour modifier les préfixes d'adresses de liens selon les modifications de la base de données.

20. Le procédé selon l'une quelconque des revendications précédentes, dans lequel le premier identifiant identifie un fournisseur de services Internet, un fournisseur de services d'application ou de l'un des services suivants :
voix sur IP,
transmission vidéo,
accès Internet.

21. Le procédé selon l'une quelconque des revendications précédentes, dans lequel le procédé utilise des messages qui sont définis pour la synchronisation de bases de données dans un procédé OSPF (ouvrir le chemin le plus court d'abord).

22. Un dispositif (AN1, 30, ER1) comprenant un moyen d'exécuter toutes les opérations d'un procédé selon l'une quelconque des revendications 1 à 21.
